# FASCICULE DE BREVET EUROPEEN

(11) **EP 1 898 072 B1**
(45) Date de publication et mention de la délivrance du brevet: **15.07.2015**
(21) Numéro de dépôt: 07115179.9
(22) Date de dépôt: 29.08.2007
(51) Int. Cl.: F02C 7/36, F16H 48/12, F02C 7/32

(54) **Dispositif d'entraînement du rotor d'un équipement auxiliaire d'un turbomoteur**
Vorrichtung zum Antrieb des Rotors eines Nebenaggregats eines Turbinentriebwerks
Drive device for the rotor of an auxiliary equipment of a turbine engine

(30) Priorité: 29.08.2006 FR 0653508
(43) Date de publication de la demande: 12.03.2008
(73) Titulaire: SNECMA, 75015 Paris (FR)
(72) Inventeur: Dusserre-Telmon, Guy, 77115 Sivry-Courtry (FR); Galivel, Jean-Pierre, 77176 Savigny Le Temple (FR); Zsiga, Zoltan, 77210 Avon (FR)
(74) Mandataire: David, Daniel

(56) Documents cités:
- EP-A1- 0 769 631
- WO-A1-01/27444
- GB-A- 1 055 118
- US-A- 2 659 240
- US-A- 2 803 943
- US-A- 3 889 780
- US-A- 4 082 139
- US-A- 4 743 776
- US-A1- 2006 107 787

## Description

L'invention concerne le domaine des turbomoteurs à turbine à gaz et vise l'entraînement d'un équipement auxiliaire, en particulier un générateur d'électricité, monté sur un support d'équipements.

Un turbomoteur comporte un support d'équipements auxiliaires, nommé boîtier d'accessoires et de transmission. Le boîtier comporte une pluralité d'équipements auxiliaires, tels que des alternateurs, des pompes à carburant et à huile, un démarreur, ainsi que divers autres équipements. Ils sont entraînés mécaniquement par un arbre du turbomoteur, en général par l'arbre du corps haute pression dans le cas d'un turboréacteur à double corps.

Voir par exemple le document US-A-4 743 776.

Dans un turboréacteur, parmi ces équipements, on trouve au moins deux alternateurs, dont l'un fournit la puissance électrique à l'aéronef propulsé par le turboréacteur et l'autre la puissance électrique nécessaire au fonctionnement du turboréacteur lui-même, plus petit que le premier. Ce dernier alternateur est généralement une machine dynamoélectrique ou alternateur à aimants permanents, nommé PMA par l'homme du métier, qui est l'acronyme de "Permanent Magnet Alternator". On le nommera, dans la suite de la description, alternateur. L'alternateur fournit notamment la puissance électrique nécessaire au fonctionnement du dispositif de contrôle et de régulation du turboréacteur, nommé FADEC (qui est l'acronyme de l'expression anglaise "Full Authority Digital Engine Control" sous laquelle il est usuellement désigné par l'homme du métier, et qui se traduit littéralement par "système numérique de contrôle du moteur à pleine autorité").

Le rotor de l'alternateur tourne à très haute vitesse, typiquement de 18000 à 30000 tours par minute. Actuellement, on connaît mal les charges (mécaniques, électromécaniques, ...) auxquelles est soumis l'alternateur en fonctionnement. Par ailleurs, cet alternateur est fréquemment démonté, puis remonté, pour des raisons de maintenance. A cet effet, on monte d'abord le rotor sur son arbre du boîtier d'accessoires puis le stator est boulonné sur le boîtier d'accessoire, autour du rotor.

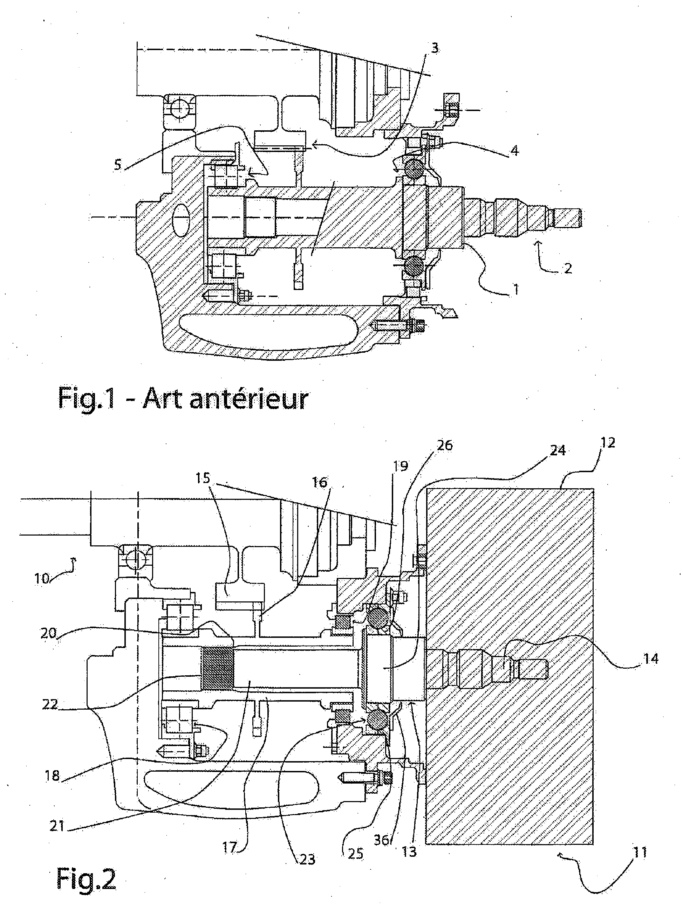

En référence à la figure 1, qui représente un dispositif d'entraînement d'un rotor d'un alternateur de l'art antérieur, le rotor de l'alternateur comporte un arbre 1, comportant une portion d'extrémité 2, supportant les éléments de l'inducteur (non représentés) tournant à l'intérieur du stator (induit), non représenté, de l'alternateur. Cet arbre 1 est entraîné par un engrenage 3 du boîtier d'accessoires et de transmission, lui-même entraîné, directement ou indirectement, par un arbre de prise de mouvement du turboréacteur. Cet arbre 1 est par ailleurs supporté par deux paliers 4, 5, solidaires d'une structure fixe du boîtier d'accessoires et de transmission. Le stator de l'alternateur est fixé sur la structure de telle manière que l'on peut le démonter indépendamment du rotor. Le rotor est ainsi monté en porte-à-faux dans le stator.

Les paliers de l'arbre du rotor sont de petites dimensions, car en l'absence de charges induites par le fonctionnement de l'alternateur (cas d'un équilibrage de bonne qualité), les éléments roulants (billes ou rouleaux) d'un palier de grande taille auraient plus tendance, non pas à rouler sur leurs bagues de roulement, mais à glisser sur celles-ci, du fait de l'inertie de ces organes lorsqu'ils sont de grandes dimensions ; en raison d'un tel glissement, les paliers peuvent se dégrader et casser, d'autant plus facilement si la circulation d'huile est mauvaise. Des paliers de plus petites dimensions sont soumis à des charges relatives plus élevées et risquent donc moins de glisser lorsque l'alternateur est bien équilibré et les charges faibles.

Or, l'alternateur étant fréquemment démonté puis remonté en maintenance, il est possible que des imprécisions de montage entraînent des charges de balourds importantes à grande vitesse sur l'arbre du rotor de l'alternateur, monté en porte-à-faux. A ces charges peut s'additionner le balourd magnétique de l'alternateur. Du fait de leur faible taille et de leur faible capacité de charges, ces paliers risquent, dans ce cas également, de s'endommager, d'autant plus facilement si la circulation d'huile entre l'alternateur et le boîtier d'accessoires est mauvaise. De plus, les charges, les à-coups et les balourds sont transmis aux engrenages du boîtier d'accessoires, par le biais de l'engrenage 3 du boîtier d'accessoires, ce qui n'est pas souhaitable.

On se trouve alors dans une impasse quant au dimensionnement des paliers de support de l'arbre du rotor de l'alternateur : s'ils sont de grandes dimensions, ils risquent de périr en raison de glissements en fonctionnement normal avec un bon équilibrage de la ligne de l'alternateur, et s'ils sont de petites dimensions, ils risquent de casser en raison de charges importantes non prévisibles (et mal connues), et ces charges sont transmises aux engrenages du boîtier d'accessoire.

Pour résoudre ce problème, on a pensé changer les paliers, à savoir, deux paliers avec des roulements à rouleaux, ou un roulement à rouleaux et un roulement à billes dans une configuration ou la configuration inverse. Aucune de ces combinaisons n'a abouti à des résultats satisfaisants.

La présente invention vise à proposer un dispositif d'entraînement du rotor de l'alternateur et plus généralement d'un équipement auxiliaire, qui évite ou du moins atténue la transmission de charges mécaniques de l'alternateur aux paliers de support de l'arbre du rotor et à la ligne d'engrenages du support d'équipements.

A cet effet, l'invention concerne un dispositif d'entraînement du rotor d'un équipement auxiliaire, monté sur un support d'équipements d'un turbomoteur qui comprend des moyens d'entraînement de l'arbre du rotor, caractérisé par le fait qu'il comporte un arbre tubulaire, entraîné par un desdits moyens et supporté par un premier et un deuxième paliers solidaires du support d'équipements, l'arbre du rotor étant coaxial à l'arbre tubulaire et un moyen d'accouplement en rotation étant ménagé entre l'arbre du rotor et l'arbre tubulaire.

Par moyen d'accouplement en rotation, on entend un moyen d'accouplement, ou de liaison, qui applique uniquement des forces tangentielles à l'arbre du rotor, c'est-à-dire perpendiculaires à son axe de rotation. L'arbre du rotor est ainsi accouplé à l'arbre tubulaire, de manière sensiblement coaxiale, et entraîné en rotation par ce dernier. Il s'agit par exemple d'une liaison à cannelures, ou encore de méplats complémentaires (par exemple, un arbre prismatique), d'un clavetage ou tout autre moyen de liaison tangentielle. Un tel moyen d'accouplement en rotation permet une certaine liberté de mouvement entre l'arbre tubulaire et l'arbre du rotor, dans la direction longitudinale et en pivotement. La liaison entre l'arbre du rotor et l'arbre présente ainsi une certaine souplesse.

Grâce à l'invention, le rotor n'est pas directement solidaire du moyen d'entraînement du support d'équipement, ou boîtier d'accessoires et de transmission, et ne lui transmet pas les charges, à-coups ou vibrations auxquelles il peut être soumis. Certaines vibrations sont reprises par le moyen d'accouplement en rotation, dont la structure absorbe intrinsèquement de telles vibrations, grâce à la souplesse dans les directions autres que tangentielle. On obtient donc un découplage entre l'arbre du rotor et le moyen d'entraînement du boîtier d'accessoire, c'est-à-dire entre l'arbre du rotor et la ligne d'engrenages du boîtier d'accessoires et de transmission, du fait de la présence de l'arbre tubulaire. La présence d'un moyen d'accouplement en rotation donne de la souplesse à l'ensemble formé par l'arbre du rotor de l'alternateur et l'arbre tubulaire.

L'invention s'applique particulièrement au cas où l'équipement auxiliaire est un alternateur monté en porte-à-faux, comportant un stator fixé au support d'équipements. C'est en effet dans ce cadre que s'est initialement posé le problème que résout l'invention, dans la mesure où le rotor, d'une part, et le stator, d'autre part, sont montés sur le boîtier d'accessoires et doivent être démontés et remontés fréquemment, leur positionnement relativement l'un par rapport à l'autre dépendant de leur positionnement relatif sur le boîtier d'accessoires et de transmission. La portée de l'invention ne saurait toutefois être limitée à ce seul équipement auxiliaire.

Dans la forme de réalisation préférée de l'invention, l'arbre du rotor est supporté par au moins un troisième palier qui est solidaire du support d'équipements. Les efforts sur le rotor peuvent ainsi être globalement repris par le troisième palier, supportant l'arbre du rotor, et être transmis à la structure fixe du support d'équipements. Un tel palier reprend exclusivement les charges du rotor de l'alternateur et non celles liées aux engrenages du boîtier d'accessoires et de transmission.

Dans la forme de réalisation préférée de l'invention, le moyen d'accouplement en rotation est une liaison du type à cannelures. Un tel moyen d'accouplement est aisé à mettre en oeuvre : il est aisé d'insérer l'arbre du rotor, comportant des cannelures, dans l'arbre tubulaire, comportant des cannelures complémentaires.

Dans une forme de réalisation préférée de l'invention, le troisième palier, de support de l'arbre du rotor de l'alternateur, est un roulement à billes et comporte des moyens de drainage de lubrifiant sur sa bague externe.

Une telle forme de réalisation procure l'avantage suivant. Du fait des moyens de drainage, le risque de glissement des billes du roulement sur la bague extérieure est réduit, ce qui permet d'utiliser un palier de plus grande taille reprenant mieux les efforts.

De préférence dans ce cas, le troisième palier est un palier dit à trois points de contact ou à quatre points de contact.

De préférence, des moyens d'amortissement par film d'huile sont agencés sur la bague externe du troisième palier.

De préférence encore, et selon une forme de réalisation particulière de l'invention, les premier et deuxième paliers, de support de l'arbre tubulaire, sont d'une taille plus petite que celle du troisième palier, de support de l'arbre du rotor de l'alternateur.

Ainsi, on peut combiner les avantages respectifs des petits et gros paliers. Les petits paliers permettent de supporter les faibles charges générées par le train d'engrenages du boîtier d'accessoires en fonctionnement normal. En outre, le gros palier peut plus facilement absorber d'éventuelles charges dues à un mauvais équilibrage, notamment en cas de démontage et remontage imprécis de l'alternateur, les glissements sur le gros palier étant par ailleurs évités du fait des moyens de drainage de lubrifiant, dans le cas d'un équilibrage de bonne qualité.

De préférence toujours, et dans le but de réduire les risques de balourd et d'échauffement, un joint à brosse peut être prévu, adjacent au troisième palier, de support de l'arbre du rotor de l'alternateur, du côté de l'alternateur.

Ainsi, l'étanchéité entre le dispositif d'entraînement du rotor de l'alternateur et l'alternateur lui-même est mieux assurée, ce qui évite l'intrusion d'huile dans l'alternateur et les balourds en résultant, comme on l'expliquera plus loin.

De préférence encore, l'arbre du rotor de l'alternateur peut comporter une portion affaiblie formant fusible, afin de rompre en cas de charges trop importantes sur le rotor, évitant ainsi la transmission de ces charges aux engrenages du boîtier d'accessoires et de transmission.

L'invention concerne également un support d'équipements, ou boîtier d'accessoires et de transmission, comportant le dispositif d'entraînement ci-dessus, et un turboréacteur comportant un tel boîtier.

L'invention sera mieux comprise à l'aide de la description suivante des formes de réalisation préférées du dispositif de l'invention, en référence aux planches de dessin annexées, sur lesquelles :
- la figure 1 représente une vue en coupe schématique d'un dispositif d'entraînement de l'art antérieur ;
- la figure 2 représente une vue en coupe schématique d'une première forme de réalisation du dispositif de l'invention;
- la figure 3 représente une vue en coupe schématique d'une deuxième forme de réalisation du dispositif de l'invention;
- la figure 4 représente une vue en coupe schématique du palier de support de l'arbre du rotor de l'alternateur dans une troisième forme de réalisation du dispositif de l'invention ;
- la figure 5 représente une vue en coupe schématique d'une quatrième forme de réalisation du dispositif de l'invention et
- la figure 6 représente une vue en coupe schématique d'une cinquième forme de réalisation du dispositif de l'invention.

Dans les diverses formes de réalisation présentées, les éléments communs sont désignés par les mêmes références.

En référence à la figure 2, un turboréacteur comporte un support d'équipements 10, ou boîtier d'accessoires et de transmission 10, communément désigné par son appellation anglaise "accessory gear box", dont l'acronyme bien connu de l'homme du métier est AGB, qui a été présenté plus haut, ci-après dénommé boîtier 10. Le boîtier 10 est fixé en périphérie du turboréacteur; par exemple, dans le cas d'un turboréacteur à double flux, il est fixé sur le carter extérieur de sa soufflante. Le turboréacteur comporte, sur l'arbre haute pression, des moyens de prise de mouvement, engrenant un arbre relié au boîtier 10, que l'on nommera arbre de prise de mouvement. Cet arbre, qui s'étend donc radialement entre l'arbre haute pression du turboréacteur et le boîtier 10, est inséré dans ce dernier et entraîne mécaniquement une pluralité d'équipements auxiliaires, ou accessoires, dont un alternateur 11 pour le dispositif de contrôle et de régulation du turboréacteur, des pompes à carburant et à huile, un démarreur, un alternateur générateur de la puissance électrique de l'avion propulsé par le turboréacteur, etc. A cet effet, le boîtier 10 comporte une pluralité d'engrenages, reliés directement ou indirectement à l'arbre de prise de mouvement sur l'arbre haute pression du turboréacteur, ces engrenages étant agencés de sorte à entraîner les divers accessoires.

L'alternateur 11 comporte un stator 12, ici schématiquement représenté en grisé, et un rotor, comprenant un arbre 13, entraîné en rotation par l'arbre de prise de mouvement, et dont une portion d'extrémité 14 s'étend au sein du stator 12. Cette portion d'extrémité 14 supporte les éléments de l'inducteur (non représentés) coopérant avec le stator 12 - l'induit - pour la formation d'électricité, de manière connue. L'arbre 13 du rotor supporte ainsi le rotor, en rotation dans le stator. L'alternateur 11 est ici à aimants permanents. Il s'agit d'un alternateur de relativement petite taille, tout du moins en comparaison avec celle de l'alternateur générateur d'électricité pour l'avion ; le rotor tourne à grande vitesse, typiquement de 18000 à 33000 tours par minute. Cette vitesse de rotation permet d'obtenir un courant stable et d'utiliser un alternateur de petite taille et ainsi limiter son encombrement.

L'arbre 13 du rotor est ici formé d'une seule pièce avec le rotor. Rotor et arbre du rotor désignent ainsi ici la même pièce. Il est également possible que l'arbre du rotor forme une pièce indépendante, rendue solidaire en rotation du rotor par tout moyen approprié.

Le boîtier 10 comporte un moyen 15 d'entraînement pour l'alternateur 11, ici un moyen d'engrènement, en l'espèce un pignon 15, solidaire d'un arbre relié aux engrenages du boîtier et donc, directement ou indirectement, à l'arbre de prise de mouvement.

Le pignon 15 d'entraînement engrène avec une roue dentée 16, ou tout autre moyen d'entraînement adapté, solidaire d'un arbre tubulaire 17. Cet arbre tubulaire 17 comporte, sur une portion, ici située, de manière optionnelle, environ au milieu de sa longueur, la roue dentée 16. L'arbre tubulaire 17 est supporté, à chacune de ses extrémités, par un premier et un deuxième paliers 18, 19, respectivement. Ces paliers 18, 19 sont ici des roulements à rouleaux, mais ils pourraient également être à billes. Les paliers à rouleaux présentent l'avantage de pouvoir supporter des charges plus élevées. Les paliers 18, 19 sont solidaires, par leur bague externe, d'une structure fixe du boîtier 10. L'arbre tubulaire 17 se situe dans l'axe du stator 12 de l'alternateur 11, c'est-à-dire dans l'axe du logement du rotor.

L'arbre tubulaire 17 comporte, sur une portion de sa surface intérieure, de préférence située de son côté opposé à l'alternateur 11, une portion 20 d'accouplement, ou de liaison, à cannelures. La portion 20 d'accouplement à cannelures comporte un ensemble de cannelures réparties uniformément autour de l'axe de l'arbre tubulaire 17, formant donc des rainures et nervures parallèles à cet axe.

Concentriquement à l'arbre tubulaire 17, et à l'intérieur de ce dernier, s'étend l'arbre 13 du rotor de l'alternateur 11. L'arbre du rotor 13 comporte une portion d'arbre 21, opposée à sa portion d'extrémité 14 insérée dans le stator 12, agencée pour s'étendre au sein de l'arbre tubulaire 17. A l'extrémité de cette portion d'arbre 21, l'arbre du rotor 13 comporte une portion 22 d'accouplement à cannelures, complémentaire de la portion 20 d'accouplement à cannelures de l'arbre tubulaire 17 et agencée pour être liée avec elle. La portion 22 d'accouplement à cannelures de l'arbre du rotor 13 n'est pas représentée en coupe sur la figure, mais en vue de profil, ce qui aide à la compréhension de la figure.

Les moyens 20, 22 d'accouplement à cannelures forment des moyens d'accouplement en rotation. En effet, lors de la rotation de l'arbre tubulaire 17, les cannelures de cet arbre 17 appliquent aux cannelures de l'arbre du rotor 13 des forces tangentielles à l'arbre du rotor 13, perpendiculaires à son axe de rotation. En particulier, l'arbre tubulaire 17 n'impose pas de contraintes dans la direction longitudinale de l'arbre du rotor 13 ou en pivotement. Il existe donc une certaine liberté de mouvements et une certaine souplesse dans la direction longitudinale et en pivotement.

Entre l'extrémité de l'arbre tubulaire 17 la plus proche de l'alternateur 11 - ici, celle qui est supportée par le palier 19 - et l'alternateur lui-même, l'arbre du rotor 13 est supporté par un palier 23. Ce palier 23 est solidaire, par sa bague externe 25, d'une structure fixe du boîtier 10. De préférence ici, le palier 23 est un roulement à billes. Il est coaxial à l'arbre tubulaire 17.

Dans la forme de réalisation préférée du dispositif de l'invention, l'arbre du rotor 13 comporte une portion 24, supportant la bague interne 26 du palier 23, qui est de diamètre élargi, par rapport à sa portion d'arbre 21 s'étendant au sein de l'arbre tubulaire 17. A partir de cette portion élargie 24, l'arbre du rotor 13 s'étend vers et dans le stator 12 de l'alternateur 11, sa portion 14 introduite dans le stator 12 étant de diamètre réduit par rapport à la portion élargie 24.

On note qu'un déflecteur 36 est prévu, contre le palier 23 de support de l'arbre du rotor 13 de l'alternateur 11, du côté de l'alternateur 11. Un tel déflecteur permet d'éviter que le lubrifiant de ce palier 23, ou même le lubrifiant d'autres éléments du dispositif d'entraînement, ne soit propulsé en direction de l'alternateur 11. En effet, la présence d'huile sur la portion d'extrémité 14 de l'arbre du rotor 13, insérée dans le stator 12 de l'alternateur 11, engendre des balourds sur le rotor car, l'espace entre rotor et stator 12 étant très faible, l'huile s'échauffe et se cokéfie. Un tel déflecteur peut être tournant afin d'améliorer son efficacité. Le déflecteur 36 a la forme d'un flasque, dont la paroi interne affleure sans contact l'arbre du rotor 13 de l'alternateur 11.

Le fonctionnement du dispositif d'entraînement de l'arbre du rotor 13 de l'alternateur 11 va maintenant être décrit.

Le pignon 15, entraîné en rotation, directement ou indirectement, par l'arbre de prise de mouvement, entraîne en rotation la roue dentée 16 de l'arbre tubulaire 17, supporté dans son mouvement par les deux paliers 18, 19 reliés à la structure fixe du boîtier 10. L'arbre tubulaire 17 entraîne, par le biais de la liaison 20, 22 à cannelures, le rotor de l'alternateur 11 en rotation, qui est supporté dans son mouvement par la liaison 20, 22 à cannelures et par le palier 23 relié à la structure fixe du boîtier 10. De la rotation de la portion d'extrémité 14 du rotor dans le stator 12 résulte la création d'électricité, utilisée pour alimenter le turboréacteur.

Ainsi agencé, le dispositif d'entraînement permet d'éviter la transmission d'éventuels charges ou balourds du rotor de l'alternateur 11 aux engrenages du boîtier 10. En effet, certaines vibrations sont absorbées par la liaison 20, 22 à cannelures, car ce type de liaison, formant moyen d'accouplement en rotation, présente intrinsèquement une certaine souplesse. Les charges sont globalement absorbées au niveau du palier 23 de support de l'arbre du rotor 13, d'autant mieux si ce dernier est de suffisamment grandes dimensions. Ce palier 23 reprend exclusivement les charges du rotor de l'alternateur 11 et aucune charge liée aux engrenages du boîtier 10. Ces charges sont transmises, non pas aux engrenages du boîtier 10, mais à la structure fixe du boîtier, qui ne souffre pas de l'absorption de telles charges.

On obtient donc un découplage entre le rotor de l'alternateur 11 et les engrenages du boîtier 10. Par ailleurs, les roulements 18, 19 supportant l'arbre tubulaire 17 étant découplés du rotor de l'alternateur 11, ils ne sont pas soumis aux charges de ce dernier. Ils peuvent donc être de petites dimensions pour permettre une rotation de l'arbre tubulaire 17 avec un minimum de frottements et un minimum de masse.

En l'espèce, et de préférence, le palier 23 supportant l'arbre du rotor 13 de l'alternateur 11 est de grandes dimensions, comparativement aux paliers 18, 19 supportant l'arbre tubulaire 17, qui sont de petites dimensions. Les charges du rotor de l'alternateur 11 sont ainsi reprises par le palier 23 supportant l'arbre du rotor 13, et principalement par lui d'ailleurs, ainsi que par la liaison 20, 22 à cannelures pour certaines vibrations, tandis que les paliers 18, 19 de l'arbre tubulaire 17 sont soumis à peu de charges et tournent donc avec peu de frottements.

Par ailleurs, les charges éventuelles sont généralement dues à des imprécisions lors du démontage et remontage de l'alternateur. Ici, le montage se fait par insertion de l'arbre du rotor 13 au sein de l'arbre tubulaire 17 et de son palier 23 de support, le stator 12 étant ensuite monté autour de l'extrémité 14 du rotor. L'insertion de l'arbre du rotor 13 au sein de l'arbre tubulaire 17 se fait sans difficultés, d'éventuelles imprécisions longitudinales étant sans influence puisque l'insertion de la portion 22 à cannelures de l'arbre du rotor 13 dans la portion 20 à cannelures de l'arbre tubulaire 17 peut ne pas être complète ou encore être trop importante. En effet, les cannelures n'ont pas besoin d'être rigoureusement face à face pour que la transmission de mouvement se fasse convenablement. Par ailleurs, des imprécisions angulaires seront absorbées par la liaison 20, 22 à cannelures, du fait de sa souplesse, ou sinon par le palier 23 supportant l'arbre du rotor 13.

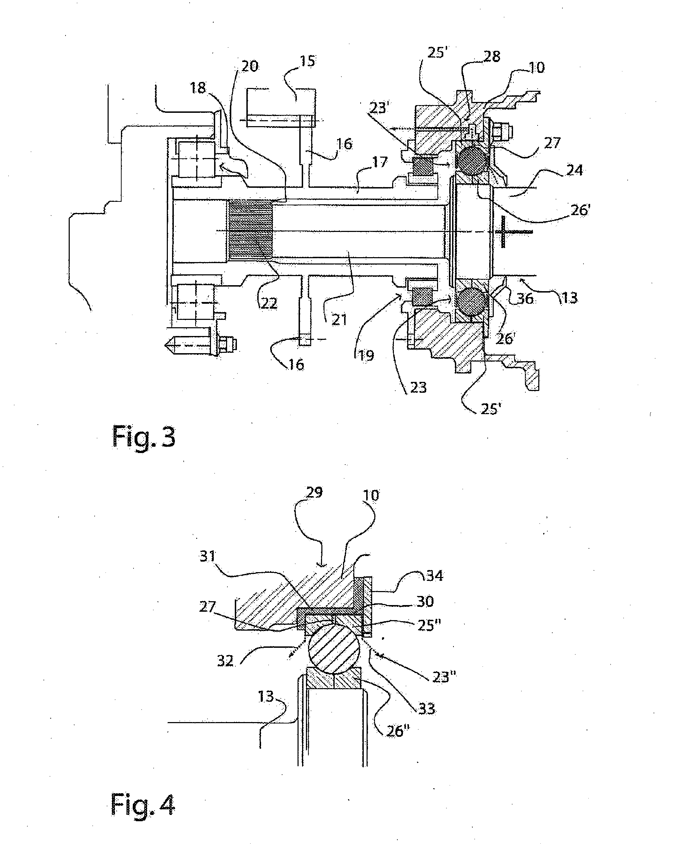

Selon une deuxième forme de réalisation, et en référence à la figure 3, le dispositif d'entraînement du rotor de l'alternateur 11 est en tous points similaire à celui présenté à la figure 2, à la différence que le palier 23' supportant l'arbre du rotor 13 de l'alternateur 11 est un palier à billes et comporte, sur sa bague externe 25', des moyens 27 de drainage de lubrifiant. En l'espèce, ces moyens comprennent au moins un canal 27, formé dans l'épaisseur de la bague externe 25', dans sa partie médiane. De préférence, une pluralité de canaux 27 sont formés et répartis uniformément le long de la circonférence de la bague externe 25'. Pour que le lubrifiant, ici de l'huile, soit effectivement drainé par les canaux 27, il ne faut pas que les billes du palier 23' viennent obstruer leur entrée. A cet effet, le palier 23' est un palier dit "à trois points de contact", bien connu de l'homme du métier. Un tel palier comporte une bague externe 25' dont la surface interne est formée, par exemple, de deux demi ogives, ou demi bagues, de rayon supérieur à celui des billes, qui se rejoignent sur la ligne médiane comportant les orifices des canaux 27. Ainsi, les billes ne peuvent entrer en contact avec la bague externe 25' le long de cette ligne, mais seulement le long de deux lignes distinctes chacune située sur une demi ogive, ou demi bague. Ainsi, chaque bille est en contact avec deux points de la bague externe 25', et a priori avec un point de la bague interne 26, situé sur sa ligne médiane. On comprend ainsi l'expression "trois points de contact".

De préférence, le palier 23' est un palier dit "à quatre points de contact", c'est-à-dire que la bague interne 26' est également une bague avec des moyens de drainage de lubrifiant (non représentés). Ces moyens peuvent être agencés, sont pour évacuer le lubrifiant, soit au contraire pour l'introduire dans le palier 23', tandis qu'il est évacué par les moyens 27 de drainage de la bague externe 25'. Dans ce dernier cas, l'huile est donc alimentée au niveau de la bague interne 26' par centrifugation et évacuée au niveau de la bague externe 25'.

De tels paliers à quatre points de contact sont décrits dans les documents FR 2, 740, 187 et FR 2, 841, 305, au nom de la demanderesse.

De cette manière, le lubrifiant du palier 23', alimenté par exemple par des gicleurs, est drainé par les canaux 27, dont les orifices ne sont jamais obstrués par les billes, un système 28 d'évacuation du lubrifiant, par exemple des canalisations fonctionnant par pompage ou aspiration, étant prévu à l'extérieur de la bague externe pour drainer le lubrifiant. L'évacuation du lubrifiant pourrait aussi simplement résulter de la rotation des billes sur la bague externe 25', qui force le lubrifiant dans les canaux 27 par force centrifuge, sans qu'un système d'évacuation spécifique ne soit prévu. Le lubrifiant ne s'accumule donc pas entre les billes et la bague externe 25', ce qui évite que les billes ne glissent sur la bague externe 25'. Ainsi, on diminue les risques d'endommagement par glissement du palier 23', qui est ainsi protégé, ainsi que le rotor qu'il supporte.

Par conséquent, grâce à l'emploi, pour le support de l'arbre du rotor 13 de l'alternateur 11, d'un palier 23' avec des moyens 27 de drainage de lubrifiant, le dispositif d'entraînement du rotor présente, non seulement les avantages précédemment présentés, c'est-à-dire le découplage entre le rotor et les engrenages du boîtier 10 qui évite la transmission des charges entre ces deux éléments, mais encore l'avantage supplémentaire qui est que le palier 23' est protégé, protégeant ainsi le rotor de l'alternateur 11 et donc l'alternateur 11. Ainsi, les engrenages du boîtier mais aussi l'alternateur 11 sont protégés.

Par ailleurs, grâce aux moyens 27 de drainage du lubrifiant, les billes du palier 23' ont moins tendance à glisser sur la bague externe 25', ce qui autorise l'emploi d'un palier 23' de plus grandes dimensions, absorbant mieux les charges du rotor.

Selon une troisième forme de réalisation préférée, et en référence à la figure 4, le dispositif d'entraînement du rotor de l'alternateur 11 est en tous points similaire à celui présenté à la figure 3, à la différence que le palier 23" supportant l'arbre du rotor 13 de l'alternateur 11 comporte, non seulement des moyens 17 de drainage du lubrifiant sur sa bague externe 25", mais encore des moyens 29 d'amortissement entre la bague externe 25" et la structure fixe du boîtier 10. Ces moyens 29 comprennent un film d'huile 30 agencé entre la bague externe 25" et la structure fixe du boîtier 10. Un tel moyen d'amortissement par film d'huile est connu de l'homme du métier sous la dénomination anglaise "squeeze film". Plus précisément, une plaque 31 est prévue du côté externe de la bague externe 25", qui ménage un espace entre elle et la bague externe 25", dans lequel est introduite l'huile provenant des canaux 27 de drainage. Il est de peu d'importance que le débit d'huile dans de tels canaux 27 ne soit pas important, car l'essentiel est qu'il y ait une certaine pression au niveau du film d'huile 30. Comme indiqué par les flèches 32, 33, l'huile peut être évacuée par des espaces ménagés sur les bords de la bague externe 25", de chaque côté de cette bague 25". Alternativement, d'autres moyens d'évacuation pourraient être prévus, par exemple vers l'extérieur de la bague externe 25", comparables aux moyens d'évacuation 28 de la forme de réalisation de la figure 3.

Ce film d'huile 30 forme un moyen d'amortissement pour le palier 23". Un tel dispositif offre l'avantage supplémentaire d'amortir une partie des charges sur le palier 23" et de le protéger encore plus, ainsi par conséquent que le rotor de l'alternateur 11. Le film d'huile 30 est alimenté par les canaux 27 de drainage et est donc simple à mettre en oeuvre. Il accroît ainsi encore le découplage entre le rotor de l'alternateur 11 et le boîtier 10, dans la mesure où, non seulement les engrenages du boîtier 10 sont découplés et donc isolés du rotor, mais encore le film d'huile 30 isole et donc découple le rotor de la structure fixe du boîtier 10. Ainsi, à la fois les engrenages et la structure fixe du boîtier 10 sont isolés du rotor.

Il est ici prévu une plaque 34 de blocage en rotation de la bague externe 25", fixée contre cette bague 25" et la structure fixe du boîtier 10, du côté de l'alternateur 11, afin d'endiguer toute rotation de la bague 25" autour de l'axe du rotor de l'alternateur 11.

La bague interne 26" peut être classique ou comporter également des moyens d'alimentation en lubrifiant, par exemple en étant formée par deux demi bagues.

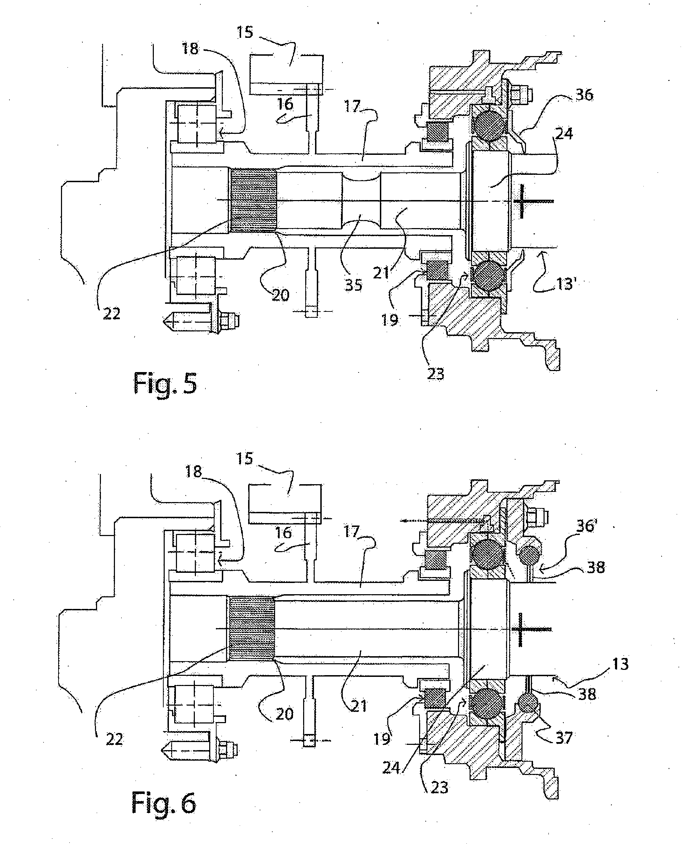

Selon une quatrième forme de réalisation préférée, et en référence à la figure 5, le dispositif d'entraînement du rotor de l'alternateur 11 est en tous points similaire à celui de l'une des autres formes de réalisation précédentes, l'arbre 13' du rotor de l'alternateur 11 comprenant une caractéristique supplémentaire. Dans cette forme de réalisation, l'arbre du rotor 13' de l'alternateur 11 comporte, dans sa portion d'arbre 21 s'étendant au sein de l'arbre tubulaire 17, une portion 35 affaiblie, ici de diamètre aminci, formant portion fusible 35. Ainsi, en cas de charges trop importantes sur le rotor et donc sur son arbre 13', la portion fusible 35 casse et découple complètement le rotor de l'arbre tubulaire 17 et donc des engrenages du boîtier 10. Il s'agit d'une sécurité supplémentaire, permettant de s'assurer que le boîtier 10 ne soit pas endommagé en cas de charges trop importantes sur le rotor de l'alternateur 11. Cette portion fusible 35 est calibrée en fonction des charges maximales que l'homme du métier juge acceptables sur le rotor de l'alternateur 11, afin de casser en cas de charges trop importantes, dépassant le seuil de charges ainsi défini.

Selon une cinquième forme de réalisation préférée, et en référence à la figure 6, le dispositif d'entraînement du rotor de l'alternateur 11 est en tous points similaire à celui de l'une des autres formes de réalisation précédentes, à la différence que l'étanchéité entre le dispositif d'entraînement du rotor de l'alternateur 11 et l'alternateur 11 lui-même n'est pas un déflecteur 36, comme dans les formes de réalisations précédentes, mais un joint à brosse 36'. Un tel joint à brosse 36' comporte une bague 37, fixée sur la structure fixe du boîtier 10, à proximité du palier 23, entre le palier 23 et l'alternateur 11, à partir de laquelle s'étendent, vers l'intérieur, des poils 38 de carbone ou de céramique, par exemple, très rapprochés les uns des autres. Un tel joint à brosse 36' est monté statique sur la structure fixe du boîtier 10, les poils 38 étant en contact avec l'arbre du rotor 13 (leur longueur est plus grande que celle qui sépare la bague 37 de la surface de l'arbre du rotor 13). On évite ainsi mieux l'apparition d'un balourd sur le rotor du fait de la présence d'huile entre le rotor et le stator 12 de l'alternateur 11, ce qui améliore encore le fonctionnement du dispositif d'entraînement de l'alternateur 11, soumis à moins de charges.

Les diverses formes de réalisation qui ont été présentées peuvent être combinées les unes aux autres, individuellement, en partie ou dans leur ensemble, puisqu'on a vu que chaque forme de réalisation différente porte sur un élément distinct. Les avantages de chaque forme de réalisation s'additionnent et se combinent entre eux, dans le même objectif de découplage et de protection des engrenages du boîtier 10 et du rotor de l'alternateur 11, ainsi que de réduction des charges auxquelles ils sont soumis.

## Revendications

1. Dispositif d'entraînement d'un rotor d'un équipement auxiliaire (11), destiné à être monté sur un support d'équipements (10) d'un turbomoteur, le support (10) comprenant des moyens (15) d'entraînement d'un arbre (13, 13') du rotor, le dispositif comportant un arbre tubulaire (17), destiné à être entraîné par un desdits moyens (15) et à être supporté par un premier (18) et un deuxième (19) paliers solidaires du support d'équipements (10), l'arbre (13, 13') du rotor étant coaxial à l'arbre tubulaire (17) et un moyen d'accouplement en rotation étant ménagé entre l'arbre (13, 13') du rotor et l'arbre tubulaire (17), l'arbre (13, 13') du rotor étant destiné à être supporté par au moins un troisième palier (23, 23', 23") solidaire du support d'équipements (10).

2. Dispositif selon la revendication 1, dans lequel l'équipement est un alternateur (11), comportant un stator (12) fixé au support d'équipements (10).

3. Dispositif selon la revendication 1, dans lequel le moyen d'accouplement en rotation est une liaison du type à cannelures (20, 22).

4. Dispositif selon la revendication 1, dans lequel le troisième palier (23', 23") est un roulement à billes et comporte des moyens (27) de drainage de lubrifiant sur sa bague externe (25', 25").

5. Dispositif selon la revendication 4, dans lequel le troisième palier (23', 23") est un palier dit à trois points de contact ou à quatre points de contact.

6. Dispositif selon la revendication 4, comportant des moyens (29) d'amortissement par film d'huile (30) agencés sur la bague externe (25") du troisième palier (23").

7. Dispositif selon la revendication 1, dans lequel les premier (18) et deuxième (19) paliers sont d'une taille plus petite que celle du troisième palier (23, 23', 23").

8. Dispositif selon la revendication 1, dans lequel un joint à brosse (36') est agencé, adjacent au troisième palier (23, 23', 23"), du côté de l'équipement (11), pour l'étanchéité de l'équipement (11) au lubrifiant du dispositif.

9. Dispositif selon la revendication 1, dans lequel l'arbre (13') du rotor comporte une portion (35) formant fusible, calibrée pour casser en cas de charges trop importantes sur le rotor.

10. Dispositif selon la revendication 1, dans lequel ledit moyen d'entraînement de l'arbre (13, 13') du rotor est un moyen (15) d'engrènement.

11. Support d'équipements pour un turbomoteur, comportant des engrenages entraînant le dispositif d'entraînement de l'une des revendications 1 à 10.

12. Turbomoteur, comprenant un support d'équipements (10), un équipement auxiliaire (11) monté sur le support d'équipements (10) et un dispositif d'entraînement d'un rotor de l'équipement auxiliaire (11), dans lequel, le dispositif d'entraînement comporte les caractéristiques du dispositif d'entraînement de la revendication 1.

13. Turbomoteur selon la revendication 13, dans lequel le dispositif d'entraînement comporte les caractéristiques du dispositif d'entraînement de l'une des revendications 2 à 10.

14. Turbomoteur selon l'une des revendications 12 ou 13 dans lequel, le turbomoteur comportant un arbre et des moyens de prise de mouvement sur l'arbre, le support d'équipements comporte des engrenages destinés à entraîner le dispositif d'entraînement, les engrenages étant entraînés par les moyens de prise de mouvement.

## Patentansprüche

1. Antriebsvorrichtung eines Rotors einer Hilfsausstattung (11), die dazu bestimmt ist, auf einen Ausstattungsträger (10) eines Turbomotors montiert zu sein, wobei der Träger (10) Mittel (15) zum Antreiben einer Welle (13, 13') des Rotors umfasst, wobei die Vorrichtung eine röhrenförmige Welle (17) umfasst, die dazu bestimmt ist, von einem der Mittel (15) angetrieben und von einem ersten (18) und einem zweiten (19) Lager getragen zu werden, die mit dem Ausstattungsträger (10) fest verbunden sind, wobei die Welle (13, 13') des Rotors mit der röhrenförmigen Welle (17) koaxial ist und ein Drehkupplungsmittel zwischen der Welle (13, 13') des Rotors und der röhrenförmigen Welle (17) eingerichtet ist, wobei die Welle (13, 13') des Rotors dazu bestimmt ist, von mindestens einem dritten Lager (23, 23', 23"), das fest mit dem Ausstattungsträger (10) verbunden ist, getragen zu werden.

2. Vorrichtung nach Anspruch 1, bei der die Ausstattung eine Lichtmaschine (11) ist, die einen Stator (12) umfasst, der an dem Ausstattungsträger (10) befestigt ist.

3. Vorrichtung nach Anspruch 1, bei der das Drehkupplungsmittel eine Verbindung des Typs mit Nuten (20, 22) ist.

4. Vorrichtung nach Anspruch 1, bei der das dritte Lager (23', 23") ein Kugellager ist und Mittel (27) zum Ableiten von Schmiermittel auf seinem äußeren Ring (25', 25") umfasst.

5. Vorrichtung nach Anspruch 4, bei der das dritte Lager (23', 23") ein so genanntes Lager mit drei Kontaktstellen oder mit vier Kontaktstellen ist.

6. Vorrichtung nach Anspruch 4, die Mittel (29) zum Dämpfen durch Ölfilm (30) umfasst, die auf dem äußeren Ring (25") des dritten Lagers (23") eingerichtet sind.

7. Vorrichtung nach Anspruch 1, bei der das erste (18) und das zweite (19) Lager eine kleinere Größe haben als das dritte Lager (23, 23', 23").

8. Vorrichtung nach Anspruch 1, bei der eine Bürstendichtung (36') neben dem dritten Lager (23, 23', 23") auf der Seite der Ausstattung (11) zur Abdichtung der Ausstattung (11) gegenüber dem Schmiermittel der Vorrichtung eingerichtet ist.

9. Vorrichtung nach Anspruch 1, bei der die Welle (13') des Rotors einen Abschnitt (35) umfasst, der eine Sicherung bildet, die kalibriert ist, um im Fall zu großer Lasten auf dem Rotor zu brechen.

10. Vorrichtung nach Anspruch 1, bei der das Antriebsmittel der Welle (13, 13') des Rotors ein Verzahnungsmittel (15) ist.

11. Ausstattungsträger für einen Turbomotor, der Verzahnungen umfasst, die die Antriebsvorrichtung einer der Vorrichtungen 1 bis 10 antreiben.

12. Turbomotor, der einen Ausstattungsträger (10), eine Hilfsausstattung (11), die auf den Ausstattungsträger (10) montiert ist, und eine Antriebsvorrichtung eines Rotors der Hilfsausstattung (11) umfasst, wobei die Antriebsvorrichtung die Merkmale der Antriebsvorrichtung des Anspruchs 1 umfasst.

13. Turbomotor nach Anspruch 13, bei dem die Antriebsvorrichtung die Merkmale der Antriebsvorrichtung eines der Ansprüche 2 bis 10 umfasst.

14. Turbomotor nach einem der Ansprüche 12 oder 13, bei dem, da der Turbomotor eine Welle und Mittel zum Bewegungseingriff auf der Welle umfasst, der Ausstattungsträger Verzahnungen umfasst, die dazu bestimmt sind, die Antriebsvorrichtung anzutreiben, wobei die Verzahnungen von den Mitteln zum Bewegungseingriff angetrieben sind.

## Claims

1. A device for driving the rotor of an auxiliary (11), to be mounted on a turbine engine auxiliaries support (10), the support (10) comprising means (15) for driving a shaft of the rotor (13, 13'), the device comprising a tubular shaft (17) to be driven by one of said means (15) and to be supported by a first bearing (18) and a second bearing (19) which are secured to the auxiliaries support (10), the rotor shaft (13, 13') being coaxial with the tubular shaft (17) and a rotational-coupling means being formed between the rotor shaft (13, 13') and the tubular shaft (17), the rotor shaft (13, 13') being to be supported by at least one third bearing (23, 23', 23") secured to the auxiliaries support (10).

2. The device as claimed in claim 1, in which the auxiliary is an alternator (11) comprising a stator (12) fixed to the auxiliaries support (10).

3. The device as claimed in claim 1, in which the rotational-coupling means is a connection of the splined type (20, 22).

4. The device as claimed in claim 1, in which the third bearing (23', 23'') is a ball bearing and comprises lubricant drainage means (27) on its outer ring (25', 25").

5. The device as claimed in claim 4, in which the third bearing (23' , 23") is what is known as a three-point contact or four-point contact bearing.

6. The device as claimed in claim 4, comprising oil-film (30) damping means (29) arranged on the outer ring (25'') of the third bearing (23").

7. The device as claimed in claim 1, in which the first bearing (18) and the second bearing (19) are smaller in size than the third bearing (23, 23', 23").

8. The device as claimed in claim 1, in which a brush seal (36') is arranged, adjacent to the third bearing (23, 23', 23''), on the same side as the auxiliary (11), so as to seal the auxiliary (11) against the lubricant used in the device.

9. The device as claimed in claim 1, in which the rotor shaft (13') comprises a portion (35) designed as a deliberate weak link, engineered to break if excessive loads are applied to the rotor.

10. The device as claimed in claim 1, in which said means (13, 13') for driving the rotor shaft is a meshing means (15).

11. An auxiliaries support for a turbine engine, comprising gears driving the drive device as claimed in one of claims 1 to 10.

12. A turbine engine comprising an auxiliary support (10), an auxiliary (11) mounted on the auxiliary support (10) and a driving means of a rotor of the auxiliary (11) in which the auxiliary support (10) comprises the feature of the device of claim 1

13. The turbine engine according to claim 13, in which the driving means comprises the features of the driving means of one of the claims 2 to 10.

14. The turbine engine according to one of the claims 12 and 13 in which the turbine engine comprising a shaft and means for taking off the movement on the shaft, the auxiliary support comprises gearings to drive the driving means, the gearings being driven by the means for taking off movement.
